# EUROPEAN PATENT SPECIFICATION

(11) **EP 3 785 197 B1**
(45) Date of publication and mention of the grant of the patent: **22.10.2025**
(21) Application number: 19717088.9
(22) Date of filing: 28.03.2019
(51) Int. Cl.: G06Q 10/105, G06Q 10/0639, G06Q 10/0637, G06Q 10/067

(54) **BUSINESS INSIGHT GENERATION SYSTEM**
SYSTEM ZUR GENERIERUNG VON GESCHÄFTSEINBLICKEN
SYSTÈME DE GÉNÉRATION D'APERÇU COMMERCIAL

(30) Priority: 24.04.2018 US 201815961285
(43) Date of publication of application: 03.03.2021
(73) Proprietor: ADP, Inc., Roseland, NJ 07068 (US)
(72) Inventor: OLETI, Manoj, Roseland, New Jersey 07068 (US); MOHAPATRA, Pradyumna, Roseland, New Jersey 07068 (US); SHARMA, Amit Kumar, Roseland, New Jersey 07068 (US); KUMMARAPU, Srinivasa Rao, Roseland, New Jersey 07068 (US); RIND, Marc, Roseland, New Jersey 07068 (US); WILSON, Richard, Roseland, New Jersey 07068 (US); KOVUR, Uday, Roseland, New Jersey 07068 (US)
(74) Representative: Kilburn & Strode LLP
(86) International application number: PCT/US2019/024624
(87) International publication number: WO 2019/209458

(56) References cited:
- US-A1- 2014 032 553
- US-A1- 2014 114 707

## Description

### BACKGROUND INFORMATION

### Field:

The present disclosure relates generally to an improved computer system and, in particular, to a method and apparatus for accessing information in a computer system. Still more particularly, the present disclosure relates to a method, a system, and a computer program product for digitally generating and presenting statistically relevant business insights into a set of business metrics for an organization.

### Background:

Information systems are used for many different purposes. For example, an information system may be used to process payroll to generate paychecks for employees in an organization. Additionally, an information system also may be used by a human resources department to maintain benefits and other records about employees. For example, a human resources department may manage health insurance plans, wellness plans, and other programs and organizations using an employee information system. As yet another example, an information system may be used to hire new employees, assign employees to projects, perform reviews for employees, and other suitable operations for the organization. As another example, a research department in the organization may use an information system to store and analyze information to research new products, analyze products, or for other suitable operations.

Currently used information systems include databases. These databases store information about the organization. For example, these databases store information about employees, products, research, product analysis, business plans, and other information about the organization.

Information about the employees may be searched and viewed to perform various operations within an organization. However, this type of information in currently used databases may be cumbersome and difficult to access relevant information in a timely manner that may be useful to performing an operation for the organization. For example, while regular aggregation methods to generate metrics can be used to get a bird's eye view of an organization, it may often be the case that a single metric in itself is not insightful. Rather, a significant change in the value of the metric as observed over a period of time or compared with sections of the company may provide a deeper understanding into the different conditions that drive those business metrics. For example, an insight into the turnover rate for an organization that identifies "turnover rate of sales department has increased 8% on the year as compared to last year" is more insightful than "turnover rate in a company 12% this year."

Therefore, it would be desirable to have a method and apparatus that take into account at least some of the issues discussed above, as well as other possible issues. For example, it would be desirable to have a method and apparatus that overcome the technical problem of presenting a potentially competitive human resource migration model for an organization.

US 2014/0114707 A1 describes techniques for summarizing statistical results. Multiple sets of statistical results are received, wherein each of the sets of statistical results are ordered according to interestingness. Insights are generated based on the multiple sets of statistical results. Relationships between the generated insights are identified. An executive summary is generated with a set of findings based on the identified relationships. An interactive visualization is provided with the generated insights based on the executive summary.

US 2014/0032553 A1 describes that a subset of (k-l)-dimensional tables are received, wherein k is greater than 1. A set of k-dimensional tables is created by combining each of the (k-1)-dimensional tables with a non-included dimension corresponding to a 1-dimensional table. Significance of interaction and interaction effect size is computed for the created set of k-dimensional tables to determine dimension and measure interactions.

### SUMMARY

According to an aspect, a method for digitally presenting statistically relevant business insights into a set of business metrics for an organization is provided as defined in claim 1. According to another aspect, a computer system is provided as defined in claim 10.

An embodiment of the present disclosure provides a method for digitally presenting statistically relevant business insights into a set of business metrics for an organization. A computer system generates a plurality of dimension aggregates for facts of human resources data across a plurality of different combinations of dimensions of the human resources data. The computer system identifies a set of comparable aggregates among the plurality of dimension aggregates. Comparable aggregates are identified based on an intersection of the dimensions of human resources data among the different combinations. The computer system generates a set of statistics for each comparable aggregate of the set of comparable aggregates. The computer system generates a business insight into the set of business metrics of the organization based on a combination of the set of statistics for a corresponding combination of dimensions of the human resources data. The computer system digitally presents the business insight.

Another embodiment of the present disclosure provides a computer system for digitally presenting statistically relevant business insights into a set of business metrics for an organization. The computer system comprises a hardware processor, a display system, and an insight engine in communication with the hardware processor and the display system. The insight engine generates a plurality of dimension aggregates for facts of human resources data across a plurality of different combinations of dimensions of the human resources data. The insight engine identifies a set of comparable aggregates among the plurality of dimension aggregates based on an intersection of the dimensions of human resources data among the different combinations. The insight engine generates a set of statistics for each comparable aggregate of the set of comparable aggregates. The insight engine generates a business insight into the set of business metrics of the organization based on a combination of the set of statistics for a comp corresponding combination of dimensions of human resources data. The insight engine digitally presents the business insight.

Yet another embodiment of the present disclosure provides a computer program product for digitally presenting statistically relevant business insights into a set of business metrics for an organization. The computer program product comprises a non-transitory computer readable storage media and program code, stored on the computer readable storage media. The program code includes code for generating a plurality of dimension aggregates for facts of human resources data across a plurality of different combinations of dimensions of human resources data. The program code includes code for identifying a set of comparable aggregates from the plurality of dimension aggregates based on an intersection of the dimensions of human resources data among the different combinations. The program code includes code for generating a set of statistics for each comparable aggregate of the set of comparable aggregates. The program code includes code for generating a business insight into the set of business metrics of the organization based on a combination of the set of statistics for a corresponding combination of dimensions of human resources data. The program code includes code for digitally presenting the business insight.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a block diagram of a human resources information environment in accordance with an illustrative embodiment;
**Figure 2** is a block diagram of a data flow for determining a business insight within a human resources modeling system in accordance with an illustrative embodiment;
**Figure 3** is a diagram of a business insight generated from comparable aggregates in accordance with an illustrative embodiment;
**Figure 4** is a diagram of different comparisons generated from comparable aggregates in accordance with an illustrative embodiment;
**Figure 5** is a flowchart of a process for digitally presenting statistically relevant business insights into a set of business metrics for an organization in accordance with an illustrative embodiment; and
**Figure 6** is a block diagram of a data processing system in accordance with an illustrative embodiment.

### DETAILED DESCRIPTION

The illustrative embodiments recognize and take into account one or more different considerations. For example, the illustrative embodiments recognize and take into account that an employer may need information about the effects of human resources information on business metrics when performing certain operations. The illustrative embodiments also recognize and take into account that searching information systems for business insights into human resources information, and identifying the effects of human resources information on business metrics, may be more cumbersome and time-consuming than desirable.

The illustrative embodiments also recognize and take into account that digitally presenting statistically relevant business insights into business metrics for an organization may facilitate accessing information about appropriate human resources data when performing operations for an organization. The illustrative embodiments also recognize and take into account that identifying business insights into human resources data and their effects on business metrics may still be more difficult than desired.

Thus, the illustrative embodiments provide a method, an apparatus, and a computer program product for digitally presenting statistically relevant business insights into a set of business metrics for an organization. A computer system generates a plurality of dimension aggregates for facts of human resources data across a plurality of different combinations of dimensions of human resources data. The computer system identifies a set of comparable aggregates among the plurality of dimension aggregates based on an intersection of the dimensions of human resources data among the different combinations. The computer system generates a set of statistics for each comparable aggregate of the set of comparable aggregates. The computer system generates a business insight into the set of business metrics of the organization based on the set of statistics for the set of comparable aggregates. The computer system digitally presents the business insight.

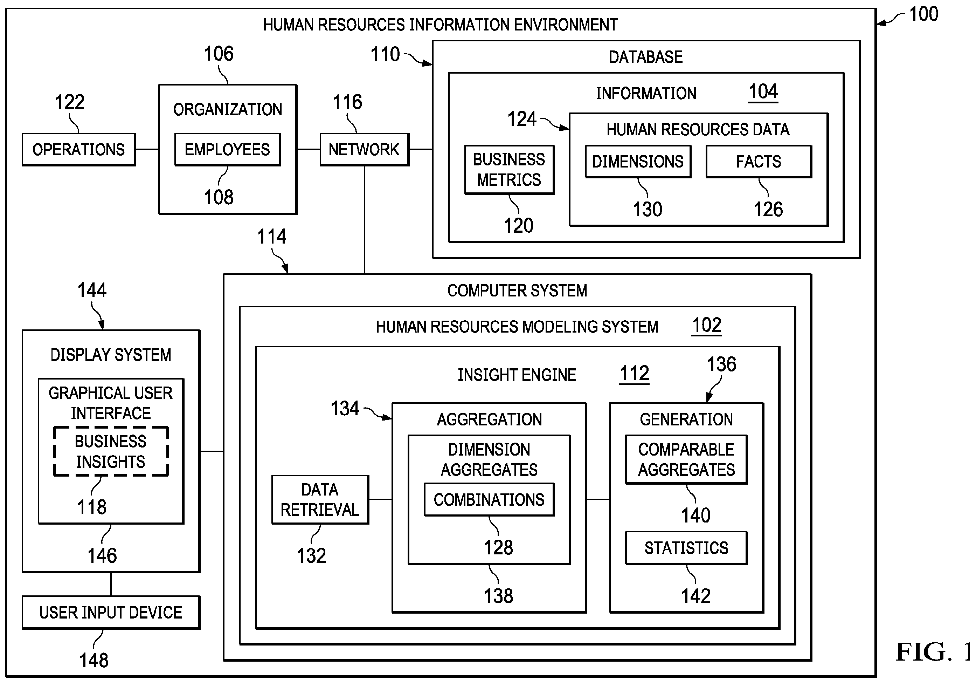

With reference now to the figures and, in particular, with reference to **Figure 1****,** an illustration of a block diagram of a human resources migration environment is depicted in accordance with an illustrative embodiment. As depicted, human resources information environment **100** includes human resources modeling system **102.**

Human resources modeling system **102** may take different forms. For example, human resources modeling system **102** may be selected from one of an employee information system, a research information system, a sales information system, an accounting system, a payroll system, a human resources system, or some other type of information system that stores and provides access to information **104.**

Information **104** can include information about organization **106** and employees **108** of organization **106.** Information **104** may include, for example, at least one of information about people, products, research, product analysis, business plans, financials, or other information relating to organization **106** and employees **108.** As depicted, information **104** is stored on database **110.**

As used herein, the phrase "at least one of," when used with a list of items, means different combinations of one or more of the listed items may be used and only one of each item in the list may be needed. In other words, "at least one of" means any combination of items and number of items may be used from the list, but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

Organization **106** may be, for example, a corporation, a partnership, a charitable organization, a city, a government agency, or some other suitable type of organization. Employees **108** are people who are employed by or associated with organizations **106.** For example, employees **108** can include at least one of employees, administrators, managers, supervisors, and third parties associated with organization **106.**

In this illustrative example, human resources modeling system **102** includes insight engine **112.** Insight engine **112** may be implemented in computer system **114.**

Computer system **114** is a physical hardware system and includes one or more data processing systems. When more than one data processing system is present, those data processing systems may be in communication with each other using a communications medium. The communications medium may be a network, such as network **116.** The data processing systems may be selected from at least one of a computer, a server computer, a workstation, a tablet computer, a laptop computer, a mobile phone, or some other suitable data processing system.

In this illustrative example, insight engine **112** generates business insights **118.** As used herein, a "business insight" is an actionable, data-driven finding that creates business value impacting one or more business metrics **120.** A business insight provides the "aha moment" for organization **106,** which can trigger a smart business decision, or an idea for a new feature or business process or marketing strategy. In order for the value to be realized, business insights **118** provide useful and actionable information that is easy to comprehend. Business insights **118** can be time bound and readily available, enabling organization **106** to uncover potential issues that may otherwise be missed within information **104.**

By generating business insights **118,** insight engine **112** enables the performance of operations **122** by organization **106** that may promote desired changes to business metrics **120** of organization **106.** For example, insight engine **112** allows organization **106** to perform operations **122** based on changes to business metrics **120** of organization **106.**

Insight engine **112** may be implemented in software, hardware, firmware, or a combination thereof. When software is used, the operations performed by insight engine **112** may be implemented in program code configured to run on hardware, such as a processor unit. When firmware is used, the operations performed by insight engine **112** may be implemented in program code and data and stored in persistent memory to run on a processor unit. When hardware is employed, the hardware may include circuits that operate to perform the operations in insight engine **112.**

In the illustrative examples, the hardware may take the form of a circuit system, an integrated circuit, an application-specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, programmable array logic, a field programmable logic array, a field programmable gate array, and other suitable hardware devices. Additionally, the processes may be implemented in organic components integrated with inorganic components and may be comprised entirely of organic components, excluding a human being. For example, the processes may be implemented as circuits in organic semiconductors.

Insight engine **112** determines business insights **118** for human resources data **124.** Human resources data **124** is information **104** about employees **108** of organization **106.** Insight engine **112** can identify business insights **118** from facts **126** about human resources data **124** by comparing different ones of combinations **128** of dimensions **130** qualifying a particular fact.

In one illustrative example, insight engine **112** identifies facts **126** by receiving a selection of different ones of facts **126.** In this manner, insight engine **112** is "user configurable," allowing a user to select relevant ones of facts **126,** and generating business insights **118** by comparing different ones of combinations **128** of dimensions **130** for ones of facts **126** selected by the user.

Insight engine **112** can include a number of different components. As used herein, "a number of" means one or more components. As depicted, insight engine **112** includes data retrieval **132,** aggregation **134,** and generation **136.**

Data retrieval **132** identifies facts **126** and dimensions **130** from human resources data **124,** and provides the identified information to aggregation **134.** Aggregation **134** generates a plurality of dimension aggregates **138** for facts **126** of human resources data **124.** As used herein, "facts" are human resources data **124** that correspond to a particular one of business metrics **120;** "dimensions" are groups of hierarchies and descriptors that define facts **126.** Aggregation **134** generates a full or partial aggregation of facts **126** across a plurality of different ones of combinations **128** of dimensions **130** of human resources data **124.**

With each and every addition of dimensions **130,** aggregation of facts **126** becomes computationally very expensive. In one illustrative example, insight engine **112** leverages big-data infrastructure to scale out and address the exponential growth in computational resources required by the inclusion of additional data dimensions.

Generation **136** identifies a set of comparable aggregates **140** among the plurality of dimension aggregates **138.** As used herein, "comparable aggregates" are different ones of dimension aggregates **138** that have intersecting ones of combinations **128** of dimensions **130** of human resources data **124.** In this manner, generation **136** identifies a set of comparable aggregates **140** based on an intersection of dimensions **130** of human resources data **124** among the different ones of combinations **128.**

Generation **136** generates a set of statistics **142** for each comparable aggregate of the set of comparable aggregates **140.** In one illustrative example, generation **136** generates a set of distributions for facts **126** of human resources data **124** across the set of comparable aggregates **140.** Generation **136** then generates the set of statistics **142** for each of comparable aggregates **140** in relation to the set of distributions. In one illustrative example, the set of statistics **142** comprises at least one of an absolute difference, a percentage difference, a Z-score, a p-value, and a percentile rank, as well as other appropriate statistics and combinations thereof.

Generation **136** generates business insights **118** into the set of business metrics **120** of organization **106.** Generation **136** generates business insights **118** based on the set of statistics **142** for the set of comparable aggregates **140.**

Insight engine **112** then digitally presents business insights **118** for organization **106.** In this illustrative example, computer system **114** can display business insights **118** on display system **144.** In this illustrative example, display system **144** can be a group of display devices. A display device in display system **144** may be selected from one of a liquid crystal display (LCD), a light emitting diode (LED) display, an organic light emitting diode (OLED) display, and other suitable types of display devices.

By determining business insights **118,** insight engine **112** enables more efficient performance of operations **122** for organization **106.** For example, organization **106** can perform operations **122,** such as, but not limited to, at least one of hiring, benefits administration, payroll, performance reviews, forming teams for new products, assigning research projects, or other suitable operations consistent with business insights **118.**

In this illustrative example, business insights **118** are displayed in graphical user interface **146** on display system **144.** An operator may perform operations **122** by interacting with graphical user interface **146** through user input generated by one or more of user input device **148,** such as, for example, a mouse, a keyboard, a trackball, a touchscreen, a stylus, or some other suitable type of user input device.

Operations **122** that are performed consistent with business insights **118** allows organization **106** to implement a human capital resources management strategy to positively effect changes in business metrics **120** based on identified correlations in human resources data **124.** For example, business insights **118** allow organization **106** to perform operations based on identified correlations in human resources data **124** that positively affect business metrics **120.**

In this illustrative example, human resources modeling system **102** digitally presents statistically relevant ones of business insights **118** into a set of business metrics **120** for organization **106.** Insight engine **112** generates a plurality of dimension aggregates **138** for facts **126** of human resources data **124** across a plurality of different combinations of dimensions **130** of human resources data **124.** Insight engine **112** identifies a set of comparable aggregates **140** among the plurality of dimension aggregates **138** based on an intersection of dimensions **130** of human resources data **124** among the different combinations. Insight engine **112** generates a set of statistics **142** for each comparable aggregate of the set of comparable aggregates **140.** Insight engine **112** generates a business insight into the set of business metrics **120** of organization **106** based on the set of statistics **142** for the set of comparable aggregates **140.** Insight engine **112** digitally presents the business insight.

The illustrative example in **Figure 1** and the examples in the other subsequent figures provide one or more technical solutions to overcome a technical problem of determining a statistically relevant insights into human resources data for an organization that make the performance of operations for an organization more cumbersome and time-consuming than desired. For example, when organization **106** performs operations **122** consistent with business insights **118,** organization **106** implements a human capital resources management strategy in a manner that positively affects business metrics **120** based on identified correlations in human resources data **124.**

In this manner, the use of human resources modeling system **102** has a technical effect of determining business insights **118** based on comparable aggregates **140,** thereby reducing time, effort, or both in the performance of operations **122** for organization **106.** In this manner, operations **122** performed for organization **106** may be performed more efficiently as compared to currently used systems that do not include human resources modeling system **102.** For example, operations, such as, but not limited to, at least one of hiring, benefits administration, payroll, performance reviews, forming teams for new products, assigning research projects, or other suitable operations for organization **106,** performed consistently with business insights **118** allows organization **106** to implement a human capital resources management strategy in a manner that positively affects business metrics **120** based on identified correlations in human resources data **124.**

As a result, computer system **114** operates as a special purpose computer system in which human resources modeling system **102** in computer system **114** enables insight engine **112.** In this illustrative example, human resources modeling system **102** digitally presents statistically relevant ones of business insights **118** into a set of business metrics **120** for organization **106.** Insight engine **112** generates a plurality of dimension aggregates **138** for facts **126** of human resources data **124** across a plurality of different ones of combinations **128** of dimensions **130** of human resources data **124.** Insight engine **112** identifies a set of comparable aggregates **140** among the plurality of dimension aggregates **138** based on an intersection of dimensions **130** of human resources data **124** among the different combinations. Insight engine **112** generates a set of statistics **142** for each comparable aggregate of the set of comparable aggregates **140.** Insight engine **112** generates a business insight into the set of business metrics **120** of organization **106** based on the set of statistics **142** for the set of comparable aggregates **140.** Insight engine **112** digitally presents the business insight.

Thus, human resources modeling system **102** transforms computer system **114** into a special purpose computer system as compared to currently available general computer systems that do not have human resources modeling system **102.** Currently used general computer systems do not reduce the time or effort needed to determine statistically relevant ones of business insights **118** based on different ones of combinations **128** of human resources data **124.**

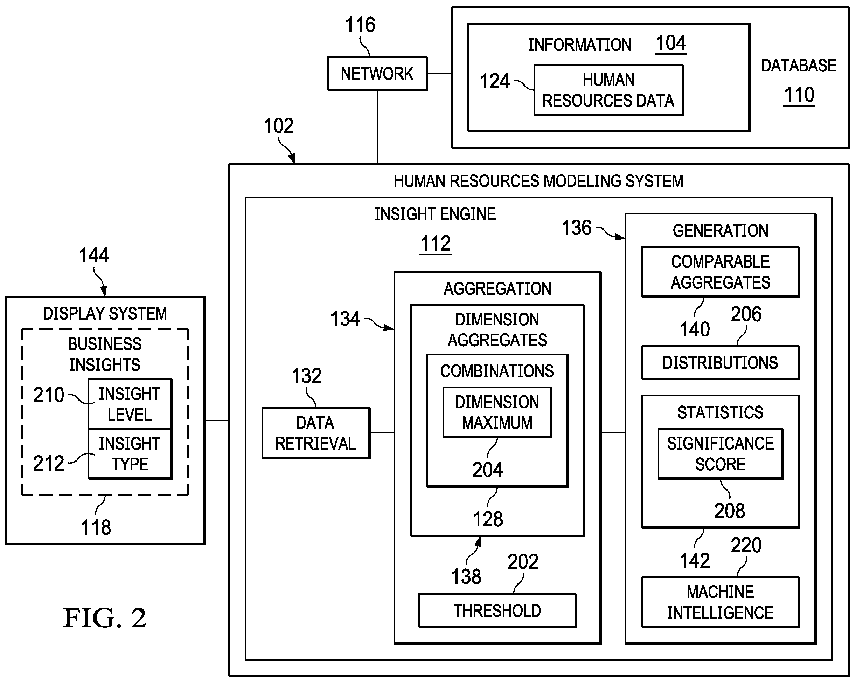

With reference next to **Figure 2****,** an illustration of a block diagram of a data flow for determining a business insight within a human resources modeling system is depicted in accordance with an illustrative embodiment. As depicted, human resources modeling system **102** is human resources modeling system **102** of **Figure 1****.**

As depicted, aggregation **134** further includes one or more threshold of **202.** Threshold **202** defines a requisite number of corresponding data records in human resources data **124.** In one illustrative example, as depicted, generating a plurality of dimension aggregates **138** limited by threshold **202** allows aggregation **134** to filter the plurality of dimension aggregates **138.** By filtering the plurality of dimension aggregates **138,** insight engine **112** excludes combinations **128** of dimension aggregates **138** that do not exceed threshold **202** defining a requisite number of corresponding data records.

As depicted, combinations **128** comprises dimension maximum **204.** Dimension maximum **204** is a maximum number of dimensions of human resources data **124** over which dimension aggregates **138** are determined. By limiting the number of dimensions, dimension maximum **204** increases the comprehensibility of business insights **118.** In one illustrative example, dimension maximum **204** can be as many as 15 different dimensions of human resources data **124.** Preferably, dimension maximum **204** is at most four dimensions of human resources data **124.**

In one illustrative example, each set of comparable aggregates **140** consists of different intersecting ones of dimension aggregates **138.** In this illustrative example, only one dimension of human resources data **124** varies among the set of comparable aggregates **140.** By limiting the number of variable dimensions in a set of comparable aggregates **140,** insight engine **112** can increase the comprehensibility and usability of business insights **118.** Business insights **118** generated in this manner highlight the effect of a particular data dimension on a particular fact of human resources data **124.**

In one illustrative example, each set of comparable aggregates **140** consists of different intersecting ones of dimension aggregates **138.** In this illustrative example, none of the dimensions of human resources data **124** vary among the set of comparable aggregates **140.** Continuing with the current example, generation **136** generates business insights **118** based on a correlation among different ones of the facts of human resources data **124** across an identical combination of dimensions of human resources data **124.** By aggregating different facts over an identical combination of data dimensions, insight engine **112** can increase the comprehensibility and usability of business insights **118.** Business insights **118** generated in this manner highlight correlations between different facts of human resources data **124,** aggregated over an identical combination of dimensions.

In one illustrative example, generation **136** generates a set of distributions **206** for a set of facts across the set of comparable aggregates **140.** Statistics **142** are then generated for each one of comparable aggregates **140** in relation to the set of distributions **206.** In this illustrative example, the set of statistics **142** comprises at least one of an absolute difference, a percentage difference, a Z-score, a p-value, and a percentile rank, as well as other appropriate statistics and combinations thereof.

As depicted, statistics **142** include significance score **208.** Significance score **208** is a measure of a statistical relevance for business insights **118.** Significance score **208** provides a measure of how statistically "interesting" that a particular business insight may be to an organization. Significance score **208** may be determined by leveraging one or more of statistics **142,** including a percentage difference, a Z-score, and a p-value, as well as other factors including a number of employees covered by the insight, a time-recency of the insight, and a number of dimensions in the insight.

In this illustrative example, significance score **208** may be compared to a relevance threshold. Insight engine **112** digitally presents the corresponding one of business insight **118** only when significance score **208** for the corresponding one of business insight **118** exceeds the relevance threshold. When business insights **118** are determined in this manner, insight engine **112** ensures that only statistically "interesting" business insights are presented, thereby enabling statistically relevant business insights to be uncovered more quickly and efficiently.

In this illustrative example, generation **136** includes machine intelligence **220,** which may be connected to data retrieval **132** and aggregation **134.** In this illustrative example, machine intelligence **220** can be implemented using one or more systems such as an artificial intelligence system, a neural network, a Bayesian network, an expert system, a fuzzy logic system, a genetic algorithm, or other suitable types of systems.

Machine intelligence **220** may be configured to receive human resources data **124,** to determine significance score **208,** and to rank business insights **118.** In an embodiment, machine intelligence **220** ranks business insights **118** according to significance score **208** to provide a ranking of how statistically "interesting" a particular business insight may be to an organization.

As depicted, business insights **118** includes insight level **210** and insight type **212.** Insight level **210** are categorical filters that can be applied to human resources data **124** when determining business insights **118.** For example, insight level **210** may include at least one of a country, an industry, a location, a union, a company size, a peer group, a talent competitor, or other groups that may be used to identify a subset of human resources data **124.** In this illustrative example, insight levels **210** can include an organizational level insight and an industry level insight. Organizational level insights restricts human resources data **124** to data about organization **106.** Industry level insights allows business insights **118** to be generated based on human resources data **124** for other comparable organizations across an industry.

As depicted, insight type **212** defines a type of comparison that is applied among different ones of comparable aggregates **140** for business insight **118.** In one illustrative example, insight type **212** is selected from a maximum/minimum type insight, a statistical outlier type insight, a time series type insight, and a percentile rank type insight, as well as other relevant types of insights and combinations thereof.

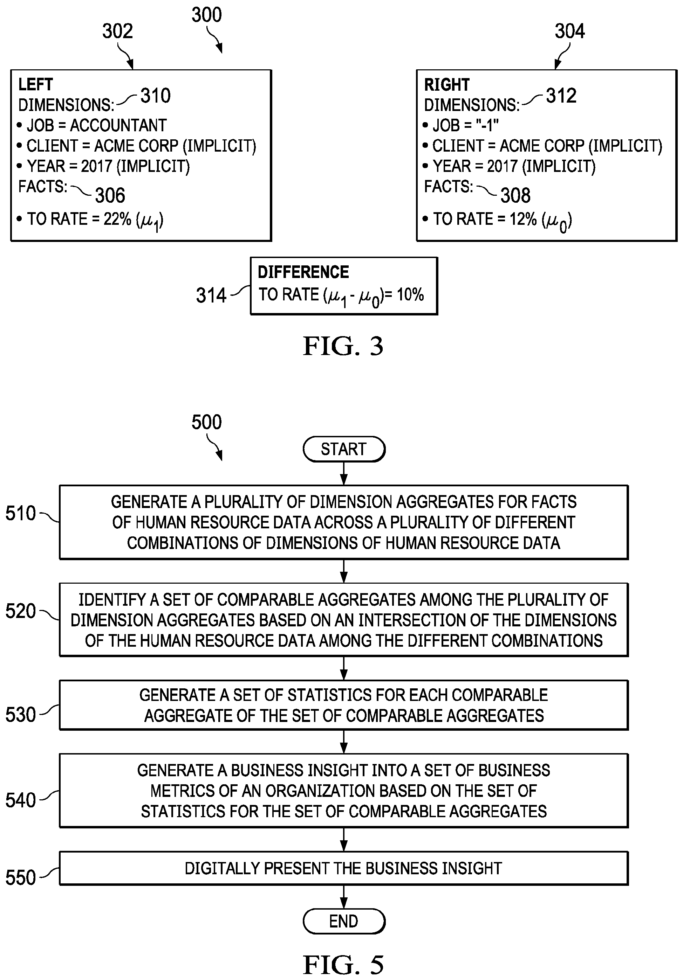

With reference next to **Figure 3****,** an illustration of a business insight generated from comparable aggregates is depicted in accordance with an illustrative embodiment. Business insight **300** is an example of business insight **119,** shown in block form in **Figure 1****.**

As depicted, dimension aggregates **302** and **304** are comparable aggregates of facts **306** and **308,** aggregated over dimensions **310** and **312,** respectively. In this illustrative example, only a single dimension, "JOB," is varied between dimension aggregates **302** and **304.** Business insight **314** highlights the effect of the "JOB" data dimension on the "turnover rate" fact of human resources data.

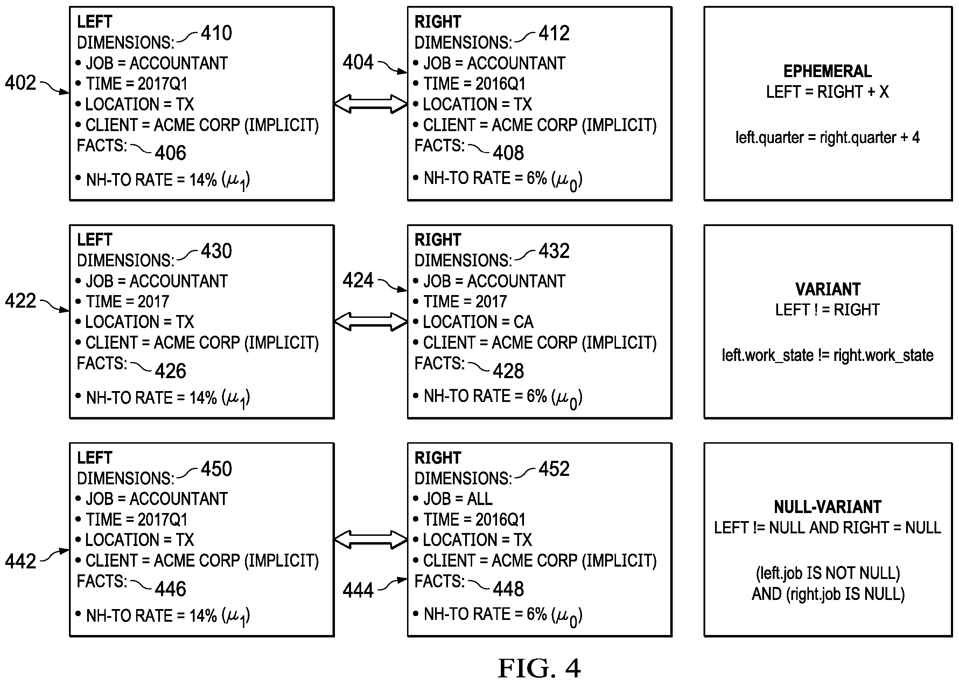

With reference next to **Figure 4****,** an illustration of different comparisons generated from comparable aggregates is depicted in accordance with an illustrative embodiment.

As depicted, dimension aggregates **402** and **404** are comparable aggregates of facts **406** and **408,** aggregated over dimensions **410** and **412,** respectively. In this illustrative example, only a single dimension, "TIME," is varied between dimension aggregates **402** and **404.** The comparison of dimension aggregates **402** and **404** is an "ephemeral" type comparison, wherein a particular dimension is varied by a determined amount among the comparable aggregates.

As depicted, dimension aggregates **422** and **424** are comparable aggregates of facts **426** and **428,** aggregated over dimensions **430** and **432,** respectively. In this illustrative example, only a single dimension, "LOCATION," is varied between dimension aggregates **422** and **424.** The comparison of dimension aggregates **422** and **424** is a "variant" type comparison, wherein a dimension aggregate aggregated over a first value of a particular dimension is compared to a dimension aggregate aggregated over a second value for the same dimension.

As depicted, dimension aggregates **442** and **444** are comparable aggregates of facts **446** and **448,** aggregated over dimensions **450** and **452,** respectively. In this illustrative example, only a single dimension, "JOB," is varied between dimension aggregates **442** and **444.** The comparison of dimension aggregates **442** and **444** is a "null-variant" type comparison, wherein a dimension aggregate aggregated over a first value of a particular dimension is compared to a dimension aggregate aggregated over all values for the same dimension.

With reference next to **Figure 5****,** an illustration of a flowchart of a process for digitally presenting statistically relevant business insights into a set of business metrics for an organization is depicted in accordance with an illustrative embodiment. The process of **Figure 5** can be a software process implemented in one or more components of a human resources modeling system, such as in insight engine **112** of **Figure 1****.**

Process **500** begins by generating a plurality of dimension aggregates for facts of human resources data across a plurality of different combinations of dimensions of human resources data (step **510**). The dimension aggregates can be dimension aggregates **138,** shown in block form in **Figure 1****.**

Process **500** identifies a set of comparable aggregates among the plurality of dimension aggregates based on an intersection of the dimensions of the human resources data among the different combinations (step **520**). The comparable aggregates can be comparable aggregates **140,** shown in block form in **Figure 1****.**

Process **500** generates a set of statistics for each comparable aggregate of the set of comparable aggregates (step **530**). The set of statistics can be statistics **142,** shown in block form in **Figure 1****.**

Process **500** generates a business insight into a set of business metrics of an organization based on the set of statistics for the set of comparable aggregates (step **540**). The business insight can be business insight **118,** shown in block form in **Figure 1****.**

Process **500** digitally presents the business insight (step **550**), with the process terminating thereafter. The business insight can be presented on a display system, such as display system **144** shown in block form in **Figure 1****.**

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

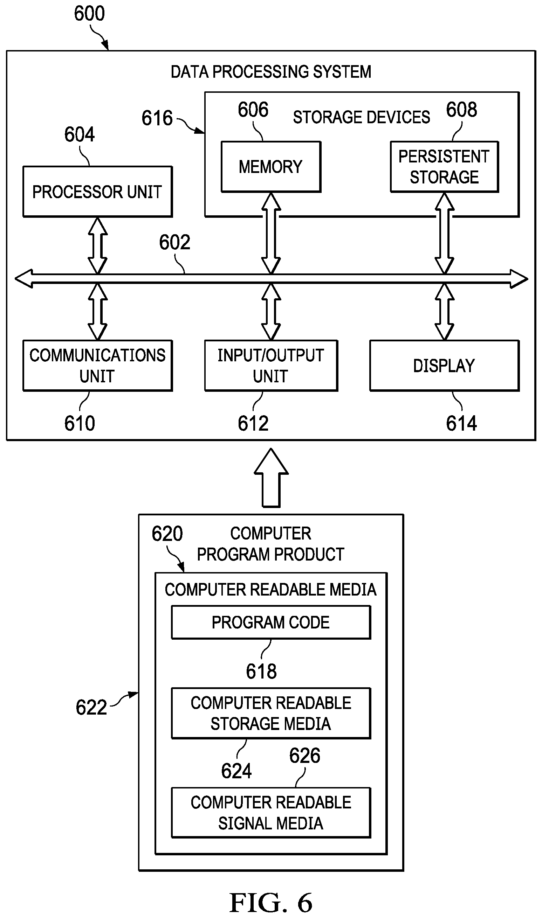

Turning now to **Figure 6****,** an illustration of a block diagram of a data processing system is depicted in accordance with an illustrative embodiment. Data processing system **600** may be used to implement human resources modeling system **102,** computer system **114,** and other data processing systems that may be used in human resources information environment **100** in **Figure 2****.** In this illustrative example, data processing system **600** includes communications framework **602,** which provides communications between processor unit **604,** memory **606,** persistent storage **608,** communications unit **610,** input/output (I/O) unit **628,** and display **614.** In this example, communications framework **602** may take the form of a bus system.

Processor unit **604** serves to execute instructions for software that may be loaded into memory **606.** Processor unit **604** may be a number of processors, a multi-processor core, or some other type of processor, depending on the particular implementation.

Memory **606** and persistent storage **608** are examples of storage devices **616.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **616** may also be referred to as computer readable storage devices in these illustrative examples. Memory **606,** in these examples, may be, for example, a random access memory or any other suitable volatile or nonvolatile storage device. Persistent storage **608** may take various forms, depending on the particular implementation.

For example, persistent storage **608** may contain one or more components or devices. For example, persistent storage **608** may be a hard drive, a solid state hard drive, a flash memory, a rewritable optical disk, a rewritable magnetic tape, or some combination of the above. The media used by persistent storage **608** also may be removable. For example, a removable hard drive may be used for persistent storage **608.**

Communications unit **610,** in these illustrative examples, provides for communications with other data processing systems or devices. In these illustrative examples, communications unit **610** is a network interface card.

Input/output unit **612** allows for input and output of data with other devices that may be connected to data processing system **600.** For example, input/output unit **612** may provide a connection for user input through at least one of a keyboard, a mouse, or some other suitable input device. Further, input/output unit **612** may send output to a printer. Display **614** provides a mechanism to display information to a user.

Instructions for at least one of the operating system, applications, or programs may be located in storage devices **616,** which are in communication with processor unit **604** through communications framework **602.** The processes of the different embodiments may be performed by processor unit **604** using computer-implemented instructions, which may be located in a memory, such as memory **606.**

These instructions are referred to as program code, computer usable program code, or computer readable program code that may be read and executed by a processor in processor unit **604.** The program code in the different embodiments may be embodied on different physical or computer readable storage media, such as memory **606** or persistent storage **608.**

Program code **618** is located in a functional form on computer readable media **620** that is selectively removable and may be loaded onto or transferred to data processing system **600** for execution by processor unit **604.** Program code **618** and computer readable media **620** form computer program product **622** in these illustrative examples. In one example, computer readable media **620** may be computer readable storage media **624** or computer readable signal media **626.**

In these illustrative examples, computer readable storage media **624** is a physical or tangible storage device used to store program code **618** rather than a medium that propagates or transmits program code **618.**

Alternatively, program code **618** may be transferred to data processing system **600** using computer readable signal media **626.** Computer readable signal media **626** may be, for example, a propagated data signal containing program code **618.** For example, computer readable signal media **626** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **600** are not meant to provide architectural limitations to the manner in which different embodiments may be implemented. The different illustrative embodiments may be implemented in a data processing system including components in addition to or in place of those illustrated for data processing system **600.** Other components shown in **Figure 6** can be varied from the illustrative examples shown. The different embodiments may be implemented using any hardware device or system capable of running program code **618.**

Thus, one or more of the illustrative examples provide a method and apparatus to overcome the complexities and time needed to determine statistically relevant business insights into human resources information for an organization. One or more illustrative examples provide a technical solution that involves determining business insights for an organization based on comparable aggregates of human resources data of organizations. Determining the business insights for an organization in this manner reduces the amount of time, effort, or both in the performance of operations for the organization.

The implementation of a human resources modeling system provides an ability to implement a competitive human resources capital management strategy for the organization more easily as compared to current systems. When business insights are determined in this manner, the business insights may be relied upon to perform operations for an organization.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for digitally presenting statistically relevant business insights into a set of business metrics (120) for an organization (106), the method comprising:
generating (510), by a computer system (114), a plurality of dimension aggregates (138) for facts (126) of human resources data (124) across a plurality of different combinations of dimensions (130) of human resources data (124), wherein generating the plurality of dimension aggregates (138) further comprises:
filtering, by the computer system (114) the plurality of dimension aggregates (138) to exclude combinations of dimensions (130) that do not exceed a threshold (202) defining a requisite number of corresponding data records;
identifying (520), by the computer system (114), a set of comparable aggregates (140) among the plurality of dimension aggregates (138) based on an intersection of the dimensions (130) of human resources data (124) among the plurality of different combinations;
generating (530), by the computer system (114), a set of statistics (142) for each comparable aggregate of the set of comparable aggregates (140);
generating (540), by the computer system (114), a business insight into the set of business metrics (120) of the organization (106) based on the set of statistics (142) for the set of comparable aggregates (140);
digitally presenting (550), by the computer system (114), the business insight; and
performing, by the computer system (114), an operation for the organization (106) based on the business insight, wherein the operation is enabled based on the business insight.

2. The method of claim 1, wherein each dimension aggregate comprises a maximum of four dimensions of human resources data (124).

3. The method of claim 1, wherein the set of comparable aggregates (140) consists of intersecting dimension aggregates, wherein only one dimension of human resources data (124) varies among the set of comparable aggregates (140).

4. The method of claim 1, wherein the set of comparable aggregates (140) consists of intersecting dimension aggregates, wherein none of the dimensions (130) of human resources data (124) vary among the set of comparable aggregates (140); and
wherein generating the a business insight further comprises generating the business insight based on a correlation among different ones of the facts (126) of human resources data (124) across an identical combination of dimensions (130) of human resources data (124).

5. The method of claim 1, further comprising:
generating, by the computer system (114) a set of distributions (206) for a set of facts (126) across the set of comparable aggregates (140); and
wherein the set of statistics (142) is generated for each comparable aggregate in relation to the set of distributions (206).

6. The method of claim 5, wherein the set of statistics (142) comprises at least one of an absolute difference, a percentage difference, a Z-score, a p-value, a percentile rank, and combinations thereof.

7. The method of claim 1, further comprising:
determining, by the computer system (114), whether the business insight exceeds a threshold (202) defining a requisite statistical relevance; and
wherein the computer system (114) digitally presents the business insight in response to determining that the business insight exceeds the threshold (202).

8. The method of claim 1, wherein the business insight is selected from an organizational level insight and an industry level insight; and
wherein the business insight is further selected from a maximum/minimum type insight, a statistical outlier type insight, a time series type insight, and a percentile rank type insight.

9. The method of claim 1, wherein the operation is selected from hiring operations, benefits administration operations, payroll operations, performance review operations, forming teams for new products, and assigning research projects.

10. A computer system (114) comprising:
a hardware processor;
a display system; and
an insight engine in communication with the hardware processor and the display system, wherein the insight engine:
generates a plurality of dimension aggregates (138) for facts (126) of human resources data (124) across a plurality of different combinations of dimensions (130) of human resources data (124), wherein generating the plurality of dimension aggregates (138) further comprises:
filtering the plurality of dimension aggregates (138) to exclude combinations of dimensions (130) that do not exceed a threshold (202) defining a requisite number of corresponding data records;
identifies a set of comparable aggregates (140) among the plurality of dimension aggregates (138) based on an intersection of the dimensions (130) of human resources data (124) among the plurality of different combinations;
generates a set of statistics (142) for each comparable aggregate of the set of comparable aggregates (140);
generates a business insight into a set of business metrics (120) of an organization (106) based on the set of statistics (142) for the set of comparable aggregates (140); and digitally presents the business insight,
wherein the computer system (114) is configured to perform an operation for the organization (106) based on the business insight, wherein the operation is enabled based on the business insight.

11. The computer system (114) of claim 10, wherein each dimension aggregate comprises a maximum of four dimensions of human resources data (124).

12. The computer system (114) of claim 10, wherein the set of comparable aggregates (140) consists of intersecting dimension aggregates, wherein only one dimension of human resources data (124) varies among the set of comparable aggregates (140).

13. The computer system (114) of claim 10, wherein the set of comparable aggregates (140) consists of intersecting dimension aggregates, wherein none of the dimensions (130) of human resources data (124) vary among the set of comparable aggregates (140); and
wherein generating the business insight further comprises generating the business insight based on a correlation among different ones of the facts (126) of human resources data (124) across an identical combination of dimensions (130) of human resources data (124).

14. The computer system (114) of claim 10, wherein the insight engine further:
generates a set of distributions (206) for a set of facts (126) across the set of comparable aggregates (140); and
wherein the set of statistics (142) is generated for each comparable aggregate in relation to the set of distributions (206).

15. The computer system (114) of claim 14, wherein the set of statistics (142) comprises at least one of an absolute difference, a percentage difference, a Z-score, a p-value, a percentile rank, and combinations thereof.

16. The computer system (114) of claim 10, wherein the insight engine further:
determines whether the business insight exceeds a threshold (202) defining a requisite statistical relevance; and
wherein the computer system (114) digitally presents the business insight in response to determining that the business insight exceeds the threshold (202).

17. The computer system (114) of claim 10, wherein the business insight is selected from an organizational level insight and an industry level insight; and
wherein the business insight is further selected from a maximum/minimum type insight, a statistical outlier type insight, a time series type insight, and a percentile rank type insight.

18. The computer system (114) of claim 10, wherein the operation is selected from hiring operations, benefits administration operations, payroll operations, performance review operations, forming teams for new products, and assigning research projects.

## Patentansprüche

1. Verfahren zur digitalen Darstellung statistisch relevanter Geschäftseinblicke in einem Satz von Geschäftsmetriken (120) für eine Organisation (106), das Verfahren umfassend:
Generieren (510), durch ein Computersystem (114), einer Vielzahl von Dimensionsaggregaten (138) für Fakten (126) von Personaldaten (124) über eine Vielzahl verschiedener Kombinationen von Dimensionen (130) von Personaldaten (124), wobei das Generieren der Vielzahl von Dimensionsaggregaten (138) ferner umfasst:
Filtern, durch das Computersystem (114), der Vielzahl von Dimensionsaggregaten (138), um Kombinationen von Dimensionen (130) auszuschließen, die einen Schwellenwert (202), der eine erforderliche Anzahl entsprechender Datensätze definiert, nicht überschreiten;
Identifizieren (520), durch das Computersystem (114), eines Satzes von vergleichbaren Aggregaten (140) unter der Vielzahl von Dimensionsaggregaten (138) basierend auf einer Schnittmenge der Dimensionen (130) von Personaldaten (124) unter den Vielzahl verschiedener Kombinationen;
Generieren (530), durch das Computersystem (114), eines Satzes von Statistiken (142) für jedes vergleichbare Aggregat des Satzes von vergleichbaren Aggregaten (140);
Generieren (540), durch das Computersystem (114), eines Geschäftseinblicks in den Satz von Geschäftsmetriken (120) der Organisation (106) basierend auf dem Satz von Statistiken (142) für den Satz von vergleichbaren Aggregaten (140);
digitales Darstellen (550), durch das Computersystem (114), des Geschäftseinblicks; und
Durchführen, durch das Computersystem (114), eines Vorgangs für die Organisation (106) basierend auf dem Geschäftseinblick, wobei der Vorgang basierend auf dem Geschäftseinblick ermöglicht wird.

2. Verfahren nach Anspruch 1, wobei jedes Dimensionsaggregat maximal vier Dimensionen von Personaldaten (124) umfasst.

3. Verfahren nach Anspruch 1, wobei der Satz von vergleichbaren Aggregaten (140) aus sich überschneidenden Dimensionsaggregaten besteht, wobei nur eine Dimension von Personaldaten (124) innerhalb des Satzes von vergleichbaren Aggregaten (140) variiert.

4. Verfahren nach Anspruch 1, wobei der Satz von vergleichbaren Aggregaten (140) aus sich überschneidenden Dimensionsaggregaten besteht, wobei keine der Dimensionen (130) von Personaldaten (124) innerhalb des Satzes von vergleichbaren Aggregaten (140) variiert; und
wobei das Generieren des Geschäftseinblicks ferner das Generieren des Geschäftseinblicks basierend auf einer Korrelation zwischen verschiedenen Fakten (126) der Personaldaten (124) über eine identische Kombination von Dimensionen (130) der Personaldaten (124) umfasst.

5. Verfahren nach Anspruch 1, ferner umfassend:
Generieren, durch das Computersystem (114), eines Satzes von Verteilungen (206) für einen Satz von Fakten (126) über den Satz von vergleichbaren Aggregaten (140); und
wobei der Satz von Statistiken (142) für jedes vergleichbare Aggregat in Bezug auf den Satz von Verteilungen (206) generiert wird.

6. Verfahren nach Anspruch 5, wobei der Satz von Statistiken (142) mindestens eine absolute Differenz, eine prozentuale Differenz, einen Z-Score, einen p-Wert, einen Perzentilrang und Kombinationen davon umfasst.

7. Verfahren nach Anspruch 1, ferner umfassend:
Bestimmen, durch das Computersystem (114), ob der Geschäftseinblick einen Schwellenwert (202) überschreitet, der eine erforderliche statistische Relevanz definiert, und
wobei das Computersystem (114) den Geschäftseinblick in Reaktion auf das Bestimmen, dass der Geschäftseinblick den Schwellenwert (202) überschreitet, digital darstellt.

8. Verfahren nach Anspruch 1, wobei der Geschäftseinblick aus einem Einblick auf Organisationsebene und einem Einblick auf Branchenebene ausgewählt wird; und
wobei der Geschäftseinblick ferner aus einem Einblick des Typs Maximum/Minimum, einem Einblick des Typs statistischer Ausreißer, einem Einblick des Typs Zeitreihen und einem Einblick des Typs Perzentilrang ausgewählt wird.

9. Verfahren nach Anspruch 1, wobei die Vorgang aus den folgenden Vorgängen ausgewählt wird: Einstellungsvorgänge, Vorgänge zur Leistungsverwaltung, Vorgänge zur Gehaltsabrechnung, Vorgänge zur Leistungsüberprüfung, Bilden von Teams für neue Produkte und Zuweisen von Forschungsprojekten.

10. Computersystem (114), umfassend:
einen Hardwareprozessor;
ein Anzeigesystem; und
eine Einblicks-Engine in Kommunikation mit dem Hardwareprozessor und dem Anzeigesystem, wobei die Einblicks-Engine:
eine Vielzahl von Dimensionsaggregaten (138) für Fakten (126) von Personaldaten (124) über eine Vielzahl verschiedener Kombinationen von Dimensionen (130) von Personaldaten (124) generiert, wobei das Generieren der Vielzahl von Dimensionsaggregaten (138) ferner umfasst:
die Vielzahl von Dimensionsaggregaten (138) filtert, um Kombinationen von Dimensionen (130) auszuschließen, die einen Schwellenwert (202), der eine erforderliche Anzahl entsprechender Datensätze definiert, nicht überschreiten;
einen Satz von vergleichbaren Aggregaten (140) unter der Vielzahl von Dimensionsaggregaten (138) basierend auf einer Schnittmenge der Dimensionen (130) von Personaldaten (124) unter den Vielzahl verschiedener Kombinationen identifiziert;
einen Satz von Statistiken (142) für jedes vergleichbare Aggregat des Satzes von vergleichbaren Aggregaten (140) generiert;
einen Geschäftseinblick in den Satz von Geschäftsmetriken (120) der Organisation (106) basierend auf dem Satz von Statistiken (142) für den Satz von vergleichbaren Aggregaten (140) generiert;
den Geschäftseinblick digital darstellt,
wobei das Computersystem (114) dazu konfiguriert ist, einen Vorgang für die Organisation (106) basierend auf dem Geschäftseinblick durchzuführen, wobei der Vorgang basierend auf dem Geschäftseinblick ermöglicht wird.

11. Computersystem (114) nach Anspruch 10, wobei jedes Dimensionsaggregat maximal vier Dimensionen von Personaldaten (124) umfasst.

12. Computersystem (114) nach Anspruch 10, wobei der Satz von vergleichbaren Aggregaten (140) aus sich überschneidenden Dimensionsaggregaten besteht, wobei nur eine Dimension von Personaldaten (124) innerhalb des Satzes von vergleichbaren Aggregaten (140) variiert.

13. Computersystem (114) nach Anspruch 10, wobei der Satz von vergleichbaren Aggregaten (140) aus sich überschneidenden Dimensionsaggregaten besteht, wobei keine der Dimensionen (130) von Personaldaten (124) innerhalb des Satzes von vergleichbaren Aggregaten (140) variiert; und
wobei das Generieren des Geschäftseinblicks ferner das Generieren des Geschäftseinblicks basierend auf einer Korrelation zwischen verschiedenen Fakten (126) der Personaldaten (124) über eine identische Kombination von Dimensionen (130) der Personaldaten (124) umfasst.

14. Computersystem (114) nach Anspruch 10, wobei die Einblicks-Engine ferner:
einen Satz von Verteilungen (206) für einen Satz von Fakten (126) über den Satz von vergleichbaren Aggregaten (140) generiert; und
wobei der Satz von Statistiken (142) für jedes vergleichbare Aggregat in Bezug auf den Satz von Verteilungen (206) generiert wird.

15. Computersystem (114) nach Anspruch 14, wobei der Satz von Statistiken (142) mindestens eine absolute Differenz, eine prozentuale Differenz, einen Z-Score, einen p-Wert, einen Perzentilrang und Kombinationen davon umfasst.

16. Computersystem (114) nach Anspruch 10, wobei die Einblicks-Engine ferner:
bestimmt, ob der Geschäftseinblick einen Schwellenwert (202) überschreitet, der eine erforderliche statistische Relevanz definiert, und
wobei das Computersystem (114) den Geschäftseinblick in Reaktion auf das Bestimmen, dass der Geschäftseinblick den Schwellenwert (202) überschreitet, digital darstellt.

17. Computersystem (114) nach Anspruch 10, wobei der Geschäftseinblick aus einem Einblick auf Organisationsebene und einem Einblick auf Branchenebene ausgewählt wird; und
wobei der Geschäftseinblick ferner aus einem Einblick des Typs Maximum/Minimum, einem Einblick des Typs statistischer Ausreißer, einem Einblick des Typs Zeitreihen und einem Einblick des Typs Perzentilrang ausgewählt wird.

18. Computersystem (114) nach Anspruch 10, wobei die Vorgang aus den folgenden Vorgängen ausgewählt wird: Einstellungsvorgänge, Vorgänge zur Leistungsverwaltung, Vorgänge zur Gehaltsabrechnung, Vorgänge zur Leistungsüberprüfung, Bilden von Teams für neue Produkte und Zuweisen von Forschungsprojekten.

## Revendications

1. Procédé de présentation numérique d'aperçus commerciaux statistiquement pertinents dans un ensemble de métriques commerciales (120) pour une organisation (106), le procédé comprenant :
la génération (510), par un système informatique (114), d'une pluralité d'agrégats de dimensions (138) pour des faits (126) de données de ressources humaines (124) sur une pluralité de différentes combinaisons de dimensions (130) de données de ressources humaines (124), la génération de la pluralité d'agrégats de dimensions (138) comprenant en outre :
le filtrage, par le système informatique (114), de la pluralité d'agrégats de dimensions (138) afin d'exclure des combinaisons de dimensions (130) qui ne dépassent pas un seuil (202) définissant un nombre requis d'enregistrements de données correspondants ;
l'identification (520), par le système informatique (114), d'un ensemble d'agrégats comparables (140) parmi la pluralité d'agrégats de dimensions (138) basés sur une intersection des dimensions (130) de données de ressources humaines (124) parmi la pluralité de combinaisons différentes ;
la génération (530), par le système informatique (114), d'un ensemble de statistiques (142) pour chaque agrégat comparable de l'ensemble d'agrégats comparables (140) ;
la génération (540), par le système informatique (114), d'un aperçu commercial dans l'ensemble de métriques commerciales (120) de l'organisation (106) sur la base de l'ensemble de statistiques (142) pour l'ensemble d'agrégats comparables (140) ;
la présentation numérique (550), par le système informatique (114), de l'aperçu commercial ; et
l'exécution, par le système informatique (114), d'une opération pour l'organisation (106) sur la base de l'aperçu commercial, l'opération étant activée sur la base de l'aperçu commercial.

2. Procédé selon la revendication 1, dans lequel chaque agrégat de dimensions comprend un maximum de quatre dimensions de données de ressources humaines (124).

3. Procédé selon la revendication 1, dans lequel l'ensemble d'agrégats comparables (140) consiste en agrégats de dimensions d'intersection, dans lequel une seule dimension des données de ressources humaines (124) varie parmi l'ensemble d'agrégats comparables (140).

4. Procédé selon la revendication 1, dans lequel l'ensemble d'agrégats comparables (140) consiste en agrégats de dimensions d'intersection, dans lequel aucune des dimensions (130) des données de ressources humaines (124) ne varie parmi l'ensemble d'agrégats comparables (140) ; et
dans lequel la génération de l'aperçu commercial comprend en outre la génération de l'aperçu commercial sur la base d'une corrélation entre différents faits (126) de données de ressources humaines (124) à travers une combinaison identique de dimensions (130) de données de ressources humaines (124).

5. Procédé selon la revendication 1, comprenant en outre :
la génération, par le système informatique (114), d'un ensemble de distributions (206) pour un ensemble de faits (126) sur l'ensemble d'agrégats comparables (140) ; et dans lequel l'ensemble de statistiques (142) est généré pour chaque agrégat comparable par rapport à l'ensemble de distributions (206).

6. Procédé selon la revendication 5, dans lequel l'ensemble de statistiques (142) comprend au moins l'un d'une différence absolue, d'une différence en pourcentage, d'un score Z, d'une valeur p, d'un rang en percentile, et leurs combinaisons.

7. Procédé selon la revendication 1, comprenant en outre :
la détermination, par le système informatique (114), du fait que l'aperçu commercial dépasse, ou non, un seuil (202) définissant une pertinence statistique requise ; et
dans lequel le système informatique (114) présente numériquement l'aperçu commercial en réponse à la détermination que l'aperçu commercial dépasse le seuil (202).

8. Procédé selon la revendication 1, dans lequel l'aperçu commercial est sélectionné parmi un aperçu de niveau organisationnel et un aperçu de niveau industriel ; et
dans lequel l'aperçu commercial est en outre sélectionné parmi un aperçu de type maximum/minimum, un aperçu de type aberrant statistique, un aperçu de type série chronologique et un aperçu de type rang en percentile.

9. Procédé selon la revendication 1, dans lequel l'opération est sélectionnée parmi des opérations opérations de recrutement, des opérations de gestion des avantages sociaux, des opérations de paie, des opérations d'examen des performances, la constitution d'équipes pour de nouveaux produits et l'attribution de projets de recherche.

10. Système informatique (114) comprenant :
un processeur matériel ;
un système d'affichage ; et
un moteur d'aperçu en communication avec le processeur matériel et le système d'affichage, où le moteur d'aperçu :
génère une pluralité d'agrégats de dimensions (138) pour des faits (126) de données de ressources humaines (124) sur une pluralité de différentes combinaisons de dimensions (130) de données de ressources humaines (124), la génération de la pluralité d'agrégats de dimensions (138) comprenant en outre :
filtre la pluralité d'agrégats de dimensions (138) afin d'exclure des combinaisons de dimensions (130) qui ne dépassent pas un seuil (202) définissant un nombre requis d'enregistrements de données correspondants ;
identifie un ensemble d'agrégats comparables (140) parmi la pluralité d'agrégats de dimensions (138) basés sur une intersection des dimensions (130) de données de ressources humaines (124) parmi la pluralité de combinaisons différentes ;
génère un ensemble de statistiques (142) pour chaque agrégat comparable de l'ensemble d'agrégats comparables (140) ;
génère un aperçu commercial dans un ensemble de métriques commerciales (120) d'une organisation (106) sur la base de l'ensemble de statistiques (142) pour l'ensemble d'agrégats comparables (140) ; et
présente numériquement l'aperçu commercial,
le système informatique (114) étant configuré pour exécuter une opération pour l'organisation (106) sur la base de l'aperçu commercial, l'opération étant activée sur la base de l'aperçu commercial.

11. Système informatique (114) selon la revendication 10, dans lequel chaque agrégat de dimensions comprend un maximum de quatre dimensions de données de ressources humaines (124).

12. Système informatique (114) selon la revendication 10, dans lequel l'ensemble d'agrégats comparables (140) consiste en agrégats de dimensions d'intersection, dans lequel une seule dimension des données de ressources humaines (124) varie parmi l'ensemble d'agrégats comparables (140).

13. Système informatique (114) selon la revendication 10, dans lequel l'ensemble d'agrégats comparables (140) consiste en agrégats de dimensions d'intersection, dans lequel aucune des dimensions (130) des données de ressources humaines (124) ne varie parmi l'ensemble d'agrégats comparables (140) ; et
dans lequel la génération de l'aperçu commercial comprend en outre la génération de l'aperçu commercial sur la base d'une corrélation entre différents faits (126) de données de ressources humaines (124) à travers une combinaison identique de dimensions (130) de données de ressources humaines (124).

14. Système informatique (114) selon la revendication 10, dans lequel, en outre, le moteur d'aperçu :
génère un ensemble de distributions (206) pour un ensemble de faits (126) sur l'ensemble d'agrégats comparables (140) ; et
dans lequel l'ensemble de statistiques (142) est généré pour chaque agrégat comparable par rapport à l'ensemble de distributions (206).

15. Système informatique (114) selon la revendication 14, dans lequel l'ensemble de statistiques (142) comprend au moins l'un d'une différence absolue, d'une différence en pourcentage, d'un score Z, d'une valeur p, d'un rang en percentile, et leurs combinaisons.

16. Système informatique (114) selon la revendication 10, dans lequel, en outre, le moteur d'aperçu :
détermine si l'aperçu commercial dépasse, ou non, un seuil (202) définissant une pertinence statistique requise ; et
dans lequel le système informatique (114) présente numériquement l'aperçu commercial en réponse à la détermination que l'aperçu commercial dépasse le seuil (202).

17. Système informatique (114) selon la revendication 10, dans lequel l'aperçu commercial est sélectionné parmi un aperçu de niveau organisationnel et un aperçu de niveau industriel ; et
dans lequel l'aperçu commercial est en outre sélectionné parmi un aperçu de type maximum/minimum, un aperçu de type aberrant statistique, un aperçu de type série chronologique et un aperçu de type rang en percentile.

18. Système informatique (114) selon la revendication 10, dans lequel l'opération est sélectionnée parmi des opérations opérations de recrutement, des opérations de gestion des avantages sociaux, des opérations de paie, des opérations d'examen des performances, la constitution d'équipes pour de nouveaux produits et l'attribution de projets de recherche.
